# EUROPÄISCHE PATENTSCHRIFT

(11) **EP 3 715 188 B1**
(45) Veröffentlichungstag und Bekanntmachung des Hinweises auf die Patenterteilung: **15.06.2022**
(21) Anmeldenummer: 20166090.9
(22) Anmeldetag: 26.03.2020
(51) Int. Cl.: B60R 25/00

(54) **SICHERUNGSSYSTEM FÜR FAHRZEUGANHÄNGER**
SECURING SYSTEM FOR VEHICLE TRAILERS
SYSTÈME DE SÉCURITÉ POUR REMORQUES DE VÉHICULES

(30) Priorität: 26.03.2019 DE 102019107790; 25.03.2020 DE 102020108312
(43) Veröffentlichungstag der Anmeldung: 30.09.2020
(73) Patentinhaber: Leuthold, Lutz, 01471 Radenburg OT Grossdittmannsdorf (DE)
(72) Erfinder: Leuthold, Lutz, 01471 Radenburg OT Grossdittmannsdorf (DE)
(74) Vertreter: Schied, Sebastian

(56) Entgegenhaltungen:
- WO-A1-95/15864
- GB-A- 2 443 879
- NL-C1- 1 022 377
- NL-C2- 1 013 307
- SE-A1- 1 551 088
- US-A1- 2008 174 431

## Beschreibung

Sicherungssystem für Fahrzeuganhänger zur kontrollierten Freigabe des Fahrzeuganhängers insbesondere für die unbeaufsichtigten Ausgabe und Rückgabe, beispielsweise einer Vermietung.

Es sind bereits unterschiedliche Sicherungssysteme für Fahrzeuganhänger bekannt.

So beschreibt die SE1551088 ein Sicherungssystem für Fahrzeuganhänger, bei dem um das Zugmaul und/oder die Deichsel eine mit einem Bauwerk verbundene Schlossanordnung vorhanden ist, wobei die Schlossanordnung mittels eines elektromechanischen Schlosses für den Berechtigten entsperrbar und/oder sperrbar ist und wobei eine Anwesenheitskontrolle des Fahrzeuganhängers vorgesehen ist wobei die Anwesenheit des Fahrzeuganhängers mittels eines Identifikationstags und einem am Bauwerk befestigten Identifikationstagleser erfasst wird.

Weiter beschreibt die DE202005003863U1 eine mechanische Verriegelung der Feststellbremse. Die DE102011010537A1 offenbart ein elektronisches Codeschloss an einem zweiteiligen Kastenschloss, welche insbesondere an LKW-Anhänger zum Einsatz kommt und zudem Bestandteil des LKW-Anhängers ist.

Die DE 6 89 09 872 U1, die DE 85 16 623 U1 und die EP 1 008 469 B1 offenbaren jeweils ein Verriegelungsgehäuse, welche auf die Kupplungsstange bzw. das Kupplungsmaul geschoben werden und mittels Sicherheitsschloss gesichert werden. Die DE 200 12 461 U1 offenbart ein zweiteiliges Steckschloss, welches mittels eines Kombinationsschlosses mechanisch verriegelbar ist.

Den genannten Lösungen ist gemein, dass zwar ein Bewegen des Anhängers jedoch nicht ein Entfernen beispielsweise durch ein Wegheben oder ein Abschleppen verhindert wird.

Aufgabe der Erfindung ist es ein Sicherungssystem für Fahrzeuganhänger zu schaffen, wobei einerseits das unberechtigte Bewegen und Entfernen des Fahrzeuganhängers vermieden und zugleich eine unbeaufsichtigten Ausgabe und Rückgabe und eine Überwachung dessen ermöglicht wird.

Mit der Erfindung wird im angegebenen Anwendungsfall erreicht, dass Sicherungssystem für Fahrzeuganhänger geschaffen wird, wobei um das Zugmaul und/oder die Deichsel eine mit einem Bauwerk verbundene Schlossanordnung vorhanden ist, wobei die Schlossanordnung mittels eines elektromechanischen Schlosses für den Berechtigten entsperrbar und sperrbar ist und wobei eine Anwesenheitskontrolle des Fahrzeuganhängers über die Bordelektronik und/oder die Verkabelung des Fahrzeuganhängers vorgesehen ist und somit der Fahrzeuganhänger zuverlässig gegen ein unberechtigtes Bewegen und Entfernen gesichert ist und bei Bedarf an den Berechtigten gegeben oder freigegeben werden kann und dies zudem überwacht wird. Es ergibt sich damit die Möglichkeit, Fahrzeuganhänger ohne zusätzliches Personal und ohne ein aufwändiges und fehleranfälliges Schlüsselsystem vermieten zu können, die Mietzeit zu erfassen und auch die Abgabe nach der Mietzeit zu ermöglichen.

Unter einem elektromechanischen Schloss wird auch ein elektronisch ansteuerbares Schloss verstanden. Derartige Schlösser können mit einer Batterie und/oder über ein Energieversorgungsnetz gespeist werden.

Unter Verwendung von beispielsweise den nahezu allgegenwärtigen mobilen Endgeräten lässt sich die Vermietung entsprechend vereinfachen, so dass physische Schlüssel nicht zwingend erforderlich sind. Auch ist über mobile Endgeräte bzw. über eine entsprechende Anwendung eine Kontrolle und Überwachung der Vermietung sowie des Fahrzeuganhängers möglich.

Somit ist eine vorteilhafte Verwendung des Sicherungssystem für Fahrzeuganhänger für eine unbeaufsichtigten Ausgabe und Rückgabe und eine Überwachung von Fahrzeuganhängern möglich, wobei sich die Fahrzeuganhänger an jeweils gleichen oder beliebigen Standorten entnehmen und/oder abgeben und die entsprechende Schlossanordnung entsperren oder sperren lasse. Die Ausgabe und Rückgabe und eine Überwachung von Fahrzeuganhängern kann dabei beispielsweise in der Form eines Mieten oder einer Leihe oder im betrieblichen Umfeld in der kontrollierten Nutzung erfolgen. So lassen sich Vermietstationen oder größere Fahrzeuganhängerpools mit dem Sicherungssystem für die jeweiligen Fahrzeuganhänger ausstatten.

Vorteilhafte Ausgestaltungen der Erfindung sind in den Unteransprüchen dargestellt.

Das Sicherungssystem erfährt eine Weiterbildung, indem das Bauwerk ein Carport oder Gebäude oder eine Komponente eines Carports oder Gebäudes ist oder eine Säule, ein Zaun oder eine Mauer oder Wand ist und sich somit die Fahrzeuganhänger einerseits über die Schlossanordnung zuverlässig an verschiedenen geeigneten Orten abstellen bzw. vorhalten und sichern lassen und anderseits die Fahrzeuganhänger gegen Witterungseinflüsse geschützt sind.

Indem die Schlossanordnung oder das Bauwerk einen Kupplungskugelkopf aufweist wird die Sicherung verbessert, da im Zusammenhang mit einer entsprechenden Schlossanordnung ein unberechtigtes Bewegen und Entfernen des Fahrzeuganhängers noch besser verhindert wird. Zudem wird eine definierte Lage und Stellung des Anhängers erreicht.

Indem das Schloss oder die Schlossanordnung durch den Berechtigten und/oder durch einen Dritten oder remote also ferngesteuert oder fernbedient entsperrbar und sperrbar ist, wird die unbeaufsichtigten Ausgabe und Rückgabe verbessert, da entsprechend erforderliche Zugänge vorgehalten oder an den Berechtigten übermittelt werden. Es ist zudem auch vorgesehen und möglich, dass eine Fernausgabe und Fernrückgabe erfolgt.

Indem das Schloss oder die Schlossanordnung und/oder das Bauwerk und/oder der Fahrzeuganhänger zumindest eine drahtgebundene oder drahtlose Kommunikationsschnittstelle umfasst und/oder einen Zugang zum Internet aufweist, lässt sich die unbeaufsichtigte Ausgabe und Rückgabe sowie die Anwesenheitskontrolle des Fahrzeuganhängers verbessern. Es lassen sich darüber Ansteuerungen der Schlossanordnung sowie Berechtigungen individualisieren. So lässt sich beispielsweise mittels eines Smartphones des Mieters die Schlossanordnung bedienen, wobei das Smartphone über lokale Schnittstellen, insbesondere Funkschnittstellen und/oder über das Internet mit der Schlossanordnung kommunizieren kann. So lassen sich Kennungen oder Codes oder andere Mittel austauschen bzw. aktivieren, die den Zugang vereinfachen und/oder sicherer ermöglichen. Somit lassen sich beispielsweise Mietzeiten erfassen und an eine zentrale Stelle beispielsweise zur Abrechnung oder zur anderweitigen Erfassung übermitteln.

Über ein Smartphone, beispielsweise des Mieters kann zudem eine Ortung des Fahrzeuganhängers durchgeführt werden, da vorgesehen werden kann, dass der Fahrzeuganhänger nicht nur zur Übergabe und Abgabe sondern auch in der Zeit dazwischen regelmäßig mit dem Smartphone kommunizieren kann und über den mobilen Internetzugang des Smartphones eine regelmäßige Status- und Standortinformationen abgefragt oder zumindest erfasst werden. Die Daten lassen sich mittels auch auf dem jeweiligen Smartphone zwischenspeichern. So lassen sich neben Betriebszeiten insbesondere auch die zurückgelegten Distanzen erfassen. Um auf eine regelmäßige Datenübertragung verzichten zu können, lassen sich entsprechend während der Mietzeit erfassten und ggf. zwischengespeicherten Daten auch erst bei Abgabe des Fahrzeuganhängers an eine zentrale Stelle übermitteln bzw. zusammentragen.

Vorteilhaft weist die Schlossanordnung und/oder das Bauwerk und/oder der Fahrzeuganhänger zumindest eine Datenerfassungs- und/oder Datenverarbeitungseinheit auf oder weist eine Verbindung zu einer Datenerfassungs- und/oder Datenverarbeitungseinheit auf. So lassen sich Zugänge und Nutzungen sowie Berechtigungen lokal oder zentral ablegen, um beispielsweise nicht ständig eine Internetverbindung nutzen zu müssen. Auch lassen sich die Nutzungsdaten, zwischenspeichern und im Bedarfsfalle zeitversetzt an eine zentrale Stelle übermitteln bzw. zusammentragen. Auch lassen sich Überwachungsdaten und Anwesenheitsdaten des Fahrzeuganhängers speichern und auswerten.

Indem eine Datenerfassungs- und/oder Datenverarbeitungseinheit an dem Fahrzeuganhänger vorhanden ist, lassen sich unabhängig vom Mieter oder Nutzer Status- und Standortinformationen, sowie Betriebszeiten und insbesondere auch die zurückgelegten Distanzen erfassen und hinsichtlich einer gegebenenfalls notwendigen Wartung oder Reparatur auch auswerten.

Als Datenerfassungs- und/oder Datenverarbeitungseinheiten kommen beispielsweise verbaute Smartphones oder Microcomputer oder ähnliche oder äquivalente Datenverarbeitungssysteme mit einem bevorzugten geringen Energieverbrauch sowie für den robusten und/oder klimaunabhängigen Einsatz. Damit ergibt sich je nach in Frage kommender Datenerfassungs- und/oder Datenverarbeitungseinheit, dass beispielsweise die Kommunikationsschnittstellen, ein Interzugang und/oder Energiespeicher ein Bestandteil der Datenerfassungs- und/oder Datenverarbeitungseinheiten sein können. Entsprechendes gilt auch für ein Ortungssystem.

Indem eine Energieversorgung für die Schlossanordnung mittels Energiespeicher und/oder über das Bauwerk vorhanden ist, lassen sich die Schlossanordnungen und damit die Fahrzeuganhänger an beliebigen Orten platzieren bzw. vorhalten und mittels des Energiespeichers die Funktionen der Schlossanordnungen autark ermöglichen. Ist jedoch ein entsprechendes Bauwerk mit einem Anschluss an ein Stromnetz vorhanden kann dieses entsprechend die Energieversorgung für die Schlossanordnung sowie gegebenenfalls die Ladung des Energiespeichers übernehmen. Hierfür lässt sich der ohnehin vorhandene Anhängerstecker verwenden, der sich an eine Anhängersteckdose am Bauwerk einstecken lässt, die mit der jeweiligen Energiequelle oder mit dem Stromnetz angepasst verbunden ist.

Weiterhin ist eine Energieversorgung für den Fahrzeuganhänger mittels Energiespeicher und/oder über das Bauwerk vorhanden, so dass insbesondere die Datenerfassungs- und/oder Datenverarbeitungseinheit mit Energie versorgt wird und anderseits der Energiespeicher während der Nutzungspausen bzw. Standzeiten in der Schlossanordnung geladen werden kann.

Als Energiespeicher kommen beispielsweise Batterien, Akkumulatoren, beispielsweise Lithium-Ionen-Akkumulatoren oder andere Akkumulatoren mit einer geringen Empfindlichkeit gegenüber Temperaturschwankungen oder niedrigen Temperaturen in Betracht.

Entsprechend der Nutzungsabsichten lassen sich die Fahrzeuganhänger an beliebigen Standorten entnehmen und abgeben und die entsprechende Schlossanordnung entsperren oder sperren. In dem die Anwesenheitskontrolle berührungslos und/oder über die Bordelektronik und/oder über die Verkabelung des Fahrzeuganhängers vorgesehen ist, lassen sich sowohl einfache Kontrollmöglichkeiten mit beispielsweise einer Schleifenmessung über die Verkabelung, zu der auch der Fahrzeuganhängerstecker gehört, als auch mittels Sensoren, welche separat an der Schlossanordnung, am Bauwerk oder Bestandteil der Bordelektronik des Fahrzeuganhängers sind, umsetzen. Die Sensoren sind beispielsweise so angeordnet, dass das Entsperren der Schlossanordnung sowie die Entnahme des Fahrzeuganhängers und auch die Rückgabe des Fahrzeuganhängers und das Sperren der Schlossanordnung erkannt und/oder beispielsweise über die Kommunikationsschnittstelle, das Internet, die Datenerfassungs- und/oder Datenverarbeitungseinheit erfasst oder weitergeleitet werden kann. Ebenso ist eine Anwesenheitskontrolle über die Bordelektronik unter Einbeziehung der Datenerfassungs- und/oder Datenverarbeitungseinheit möglich.

Indem an der Schlossanordnung oder am Bauwerk ein Steckanschluss, beispielswiese als Anhängersteckdose für einen Fahrzeuganhängerstecker vorhanden ist, lässt sich der Fahrzeuganhänger über den in den Steckanschluss eingesteckten Fahrzeuganhängerstecker mit seinen Komponenten, wie beispielsweise den Energiespeicher, die Datenerfassungs- und/oder Datenverarbeitungseinheit und die Kommunikationsschnittstelle sowie sofern vorhanden die Sensoren mit Energie versorgen und zugleich lässt sich eine Überwachung des Fahrzeuganhängers und dessen Bordelektronik realisieren.

Eine Schleifenmessung im bzw. über den Fahrzeuganhängerstecker oder eine andere Form der Überwachung wäre mit dem Steckanschluss somit einfacher umsetzbar. So kommen auch Schleifenmessungen aller oder bestimmter oder abwechselnd unterschiedlicher Leuchten der Anhängerbeleuchtung in Betracht. Mittels der Schleifenmessungen der Leuchten lassen sich diese auch auf Ihre Funktionstüchtigkeit überwachen, um diese bei einem Defekt vor einem Ausleihen gegebenenfalls austauschen zu können.

Indem ein Ortungssystem des Fahrzeuganhängers auslesbar ist, lassen sich Standortdaten, Fahrtrecken und Distanzen und auch Geschwindigkeiten erfassen und auswerten. Somit lassen sich beispielsweise nach den Nutzungsdaten Inspektionen planen und bei Überschreitung der Mietzeit oder bei Diebstahl der Verbleib des Fahrzeuganhängers ermitteln. Das Ortungssystem ist am Fahrzeuganhänger vorhanden oder vorzugsweise ein integrierter Bestandteil der Datenerfassungs- und/oder Datenverarbeitungseinheit. Ist neben dem Ortungssystem am Fahrzeuganhänger zudem eine Kommunikationsschnittstelle daran vorhanden, lassen sich Informationen anhand der durch die Ortungsfunktion möglichen Geschwindigkeitserfassung und in Verbindung mit der Kommunikationsschnittstelle und/oder der Datenerfassungs- und/oder Datenverarbeitungseinheit Mitteilungen oder Warnungen an den Mieter weitergeben, wenn beispielsweise ein zulässiges Gesamtgewicht und/oder die Geschwindigkeit des Fahrzeuganhängers überschritten wird.

Indem zumindest ein beleuchteter Werbeträger oder eine beleuchtete Werbefläche am Fahrzeuganhänger betreibbar ist, lassen sich zumindest in den Nutzungspausen und beispielsweise im gesperrten Zustand der Schlossanordnung Werbungen anzeigen oder auf eine Fahrzeuganhängervermietung hinweisen.

Mehrere Ausführungsbeispiele der Erfindung sind in den Zeichnungen dargestellt und werden im Folgenden näher beschrieben. Es zeigen:
Fig. 1 eine perspektivische Darstellung eines Sicherungssystems für Fahrzeuganhänger, wobei an einem Bauwerk als Säule eine Schlossanordnung mit elektromechanischem Schloss vorhanden ist und ein Fahrzeuganhänger, der in der Schlossanordnung gesichert bzw. gesperrt ist,
Fig. 2 die Draufsicht einer Schlossanordnung als Kasten mit elektromechanischem Schloss und mit Zugmaul eines Fahrzeuganhängers, das in der Schlossanordnung gesichert bzw. gesperrt ist,
Fig. 3 die Draufsicht einer Schlossanordnung als beabstandete parallele Wandabschnitte an einem Bauwerk als Wand mit Kupplungskugelkopf und elektromechanischen Schloss und mit Zugmaul eines Fahrzeuganhängers, das in der Schlossanordnung gesichert bzw. gesperrt ist,
Fig. 4 die Vorderansicht einer Schlossanordnung als Kasten mit elektromechanischem Schloss und mit Zugmaul eines Fahrzeuganhängers, das in der Schlossanordnung gesichert bzw. gesperrt ist,
Fig. 5 die Vorderansicht einer Schlossanordnung als beabstandete parallele seitliche Wandabschnitte und einem die seitlichen Wandabschnitte verbindenden Wandabschnitt unter dem Zugmaul und ein das Zugmaul eines Fahrzeuganhängers in der Schlossanordnung sicherndes bzw. sperrendes elektromechanisches Schloss,
Fig. 6 die perspektivische Seitenansicht einer Schlossanordnung als Kasten mit elektromechanischem Schloss und mit Zugmaul eines Fahrzeuganhängers, das in der Schlossanordnung gesichert bzw. gesperrt ist und
Fig. 7 die perspektivische Seitenansicht einer Schlossanordnung als beabstandete parallele Wandabschnitte an einem Bauwerk als Wand mit Kupplungskugelkopf und elektromechanischen Schloss und mit Zugmaul eines Fahrzeuganhängers, das in der Schlossanordnung gesichert bzw. gesperrt ist.

Das erfindungsgemäße Sicherungssystem für Fahrzeuganhänger 11, umfasst eine um das Zugmaul 1 und/oder die Deichsel 1 mit einem Bauwerk 2 verbundene Schlossanordnung 3. Die Schlossanordnung 3 ist mittels eines elektromechanischen Schlosses 4 für den Berechtigten entsperrbar und/oder sperrbar, so dass der Fahrzeuganhänger 11 bei Berechtigung und bei Bedarf für eine Benutzung freigegeben werden kann und nach der Benutzung wieder anschließbar ist. Um dies zu überwachen, ist eine Anwesenheitskontrolle des Fahrzeuganhängers 11 vorgesehen. Die Anwesenheitskontrolle ist beispielsweise als Schleifenstrommessung über den Fahrzeuganhänger 11 oder Fahrzeuganhänger 11 oder den Fahrzeuganhängerstecker 12 ausgeführt. Die Anwesenheitskontrolle ist vorzugsweise mit einer Kommunikationsschnittstelle 6 und eine Datenverarbeitungseinheit 7 zumindest funktionell verbunden. Es kann somit erfasst werden, ob der Fahrzeuganhänger 11 verfügbar oder in Benutzung ist. Zudem lässt sich auch der Versuch des unberechtigten Entnehmens bzw. Entfernens überwachen bzw. erkennen. Die Kommunikationsschnittstelle 6 kann vorzugsweise eine Verbindung zum mobilen Internet und/oder zu einem kabellosen lokalen Netzwerk herstellen. Somit lassen sich die Anwesenheitsdaten an den Eigentümer oder Vermieter übermitteln. Weiterhin lassen sich auch Nutzungszeiträume erfassen, da die Startzeit der Entnahme und die Endzeit bei der Rückgabe erfasst, gegebenenfalls gespeichert bzw. an eine zentrale Erfassung übermittelt werden.

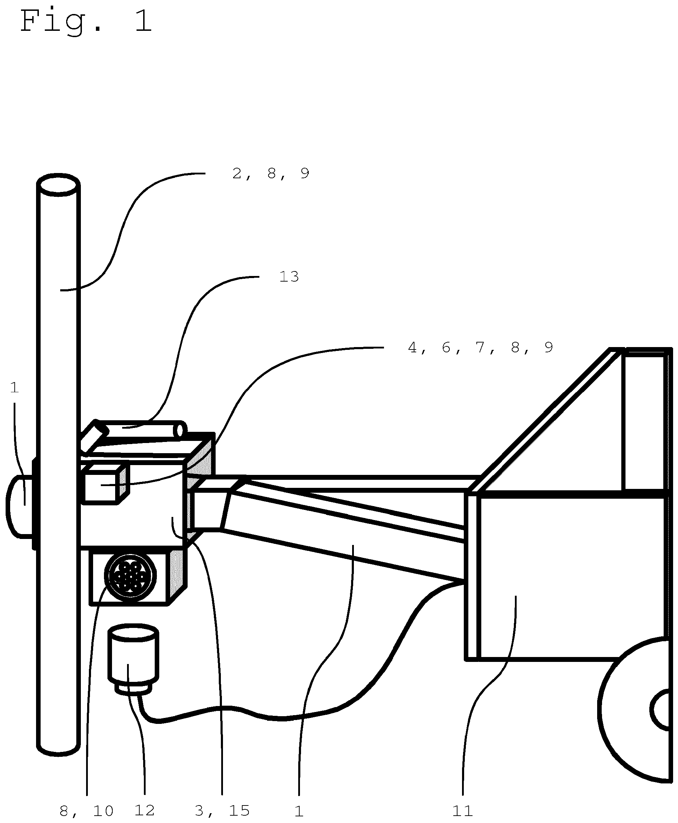

Das Bauwerk 2 ist ein Carport oder Gebäude oder eine Komponente, wie eine Wand eines Carports oder Gebäudes. So lässt sich eine Überdachung für die Fahrzeuganhänger 11 bei gleichzeitiger Sicherung umsetzen. Das Bauwerk kann weiterhin eine Säule sein, wie sie in der Figur 1 dargestellt ist. Ebenso kann das Bauwerk 2 ein Zaun oder eine Mauer oder freistehende Wand sein.

Die Figur 1 zeigt ein Sicherungssystem, welches an einer Säule als Bauwerk 2 angeordnet ist. Das Sicherungssystem umfasst eine Schlossanordnung 3 in Form eines Kastens 15 mit einem elektromechanischen Schloss 4. An der Schlossanordnung 3 ist weiterhin ein Steckanschluss 10 für einen Fahrzeuganhängerstecker 12 vorhanden. In die Schlossanordnung 3 ist das Zugmaul 1 des Fahrzeuganhängers 11 eingeschoben und mittels eines im elektromechanischen Schloss 4 veriegelbaren Stabes 16 oder Bolzens 16 oder Riegels 16 gegen eine unberechtigte Entnahme gesperrt. Das elektromechanische Schloss 4 umfasst eine drahtlose Kommunikationsschnittstelle 6 mit einem Zugang zum Internet und eine Datenerfassungs- und/oder Datenverarbeitungseinheit 7. Hiermit können die Aktivitäten überwacht und an eine zentrale Stelle übermittelt werden. Es ist damit auch möglich, dass elektromechanische Schloss 4 remote zu bedienen oder die Bedienung für einen Berechtigten zu ermöglichen.

Die Energieversorgung 8 für die Schlossanordnung 2 ist über das Bauwerk 2 vorhanden. Alternativ oder zusätzlich lässt sich die Energieversorgung 8 auch über Energiespeicher 9 umsetzen die am Bauwerk 2 oder an der Schlossanordnung 3 vorhanden sind.

Über die Energieversorgung 8 lässt sich auch der Steckanschluss 10 mit Energie versorgen, um den Fahrzeuganhänger 11 mit etwaigen Verbrauchern, wie ein beleuchteten Werbeträger oder eine beleuchtete Werbefläche mit Energie versorgen zu können. Der Verbraucher kann auch eine Stützbatterie oder Hilfsbatterie als Energiespeicher 9 sein, welcher in der Zeit der Nichtbenutzung des Fahrzeuganhängers geladen wird.

Das elektromechanische Schloss 4 lässt sich auf unterschiedliche Weise bedienen, beispielsweise mittels Zahlenkombination oder mittels einer Anwendung, welche auf einem mobilen Endgerät, welches über das mobile Internet oder eine lokale, vorzugsweise drahtlose Datenverbindung mit dem Schloss 4 oder der Datenerfassungs- und/oder Datenverarbeitungseinheit 7 sich zum Bedienen verbindet oder Zugangsdaten oder Entsperrdaten zur Verfügung stellt.

Die Datenerfassungs- und/oder Datenverarbeitungseinheit 7 an der Schlossanordnung 3 oder am Schloss 4 ermöglicht somit das Vorhalten bzw. Verwalten von Zugangs- oder Entsperrdaten und den damit einhergehenden Nutzern und Nutzungsdaten.

Ein Abgleich von Zugangsdaten mit einer zentralen Datenerfassungs- und/oder Datenverarbeitungseinheit 7 mittels einer Netzwerkverbindung über die Kommunikationsschnittstelle 6 ist ebenfalls vorgesehen.

In der Datenerfassungs- und/oder Datenverarbeitungseinheit 7 oder dem Schloss 4, welche als integrale Einheit ausgeführt sein können, lassen sich die Zugänge für berechtigte Nutzer hinterlegen. Als Redundanz für einen begrenzten Zeitraum lassen sich diese auch ohne Netzwerkverbindung nutzbar hinterlegen. Die Datenerfassungs- und/oder Datenverarbeitungseinheit 7 und die Schlossanordnung 3 lassen sich ebenfalls als integrale Einheit ausführen.

Als weitere oder kombinierte Kommunikationsschnittstelle 6 für lokale, vorzugsweise drahtlose Datenverbindung kommen beispielsweise WLAN, Bluetooth, NFC oder andere Funktechnologien in Betracht.

Je nachdem, ob ein WLAN vorhanden ist, lässt sich der Zugang zum Internet über das jeweilige WLAN oder das mobile Internet realisieren.

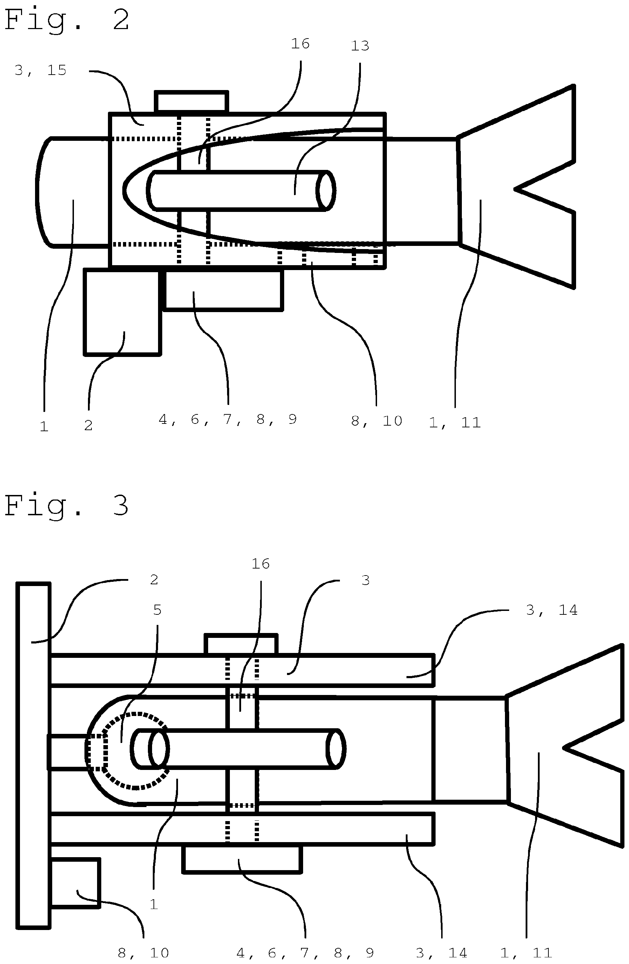

Die Figur 2 zeigt ein Sicherungssystem von oben, welches an einer Säule als Bauwerk 2 angeordnet ist. Das Sicherungssystem umfasst eine Schlossanordnung 3 in Form eines Kastens 15 mit einem elektromechanischen Schloss 4, welches eine Kommunikationsschnittstelle 6, eine Datenerfassungs- und/oder Datenverarbeitungseinheit 7 sowie Energieversorgung 8 mit einen Energiespeicher 9 umfasst. An der Schlossanordnung 3 ist an deren Unterseite weiterhin ein Steckanschluss 10 für einen Fahrzeuganhängerstecker 12 vorhanden. In die Schlossanordnung 3 ist das Zugmaul 1 des Fahrzeuganhängers 11 eingeschoben und mittels eines im elektromechanischen Schloss 4 veriegelbaren Stabes oder Bolzens oder Riegels gegen eine unberechtigte Entnahme gesperrt. Der Kasten 15 der Schlossanordnung 3 ist im oberen Bereich bereichsweise geöffnet, um das Zugmaul 1 mit dem Griff 13 bequem einzufädeln oder herauszuziehen zu können.

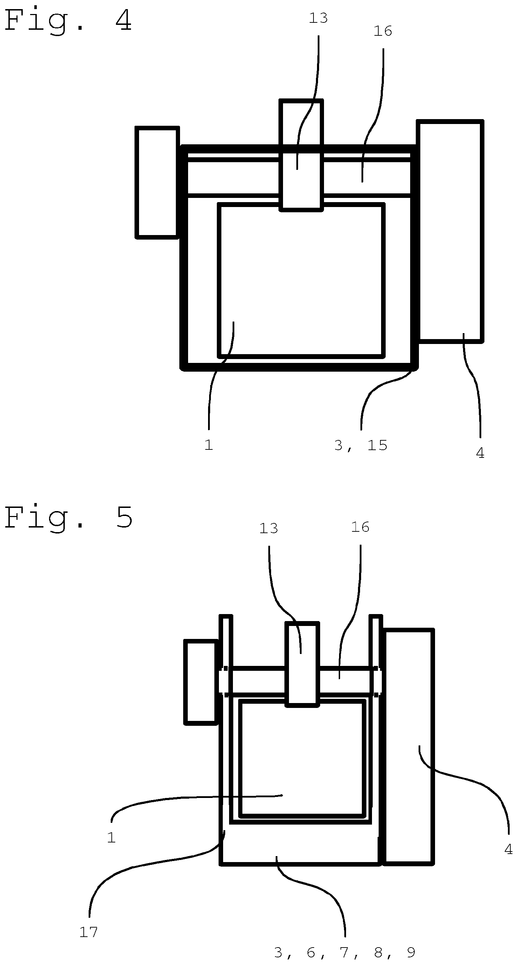

In Figur 4 ist die Vorderansicht einer Schlossanordnung 3 als Kasten 15 mit elektromechanischem Schloss 4 und mit Zugmaul 1 eines (nicht dargestellten) Fahrzeuganhängers dargestellt. Das Zugmaul 1 ist in der Schlossanordnung 3 mit einem Bolzen 16 oder Riegel 16 gesichert bzw. gesperrt. Nicht dargestellt ist das Bauwerk 2.

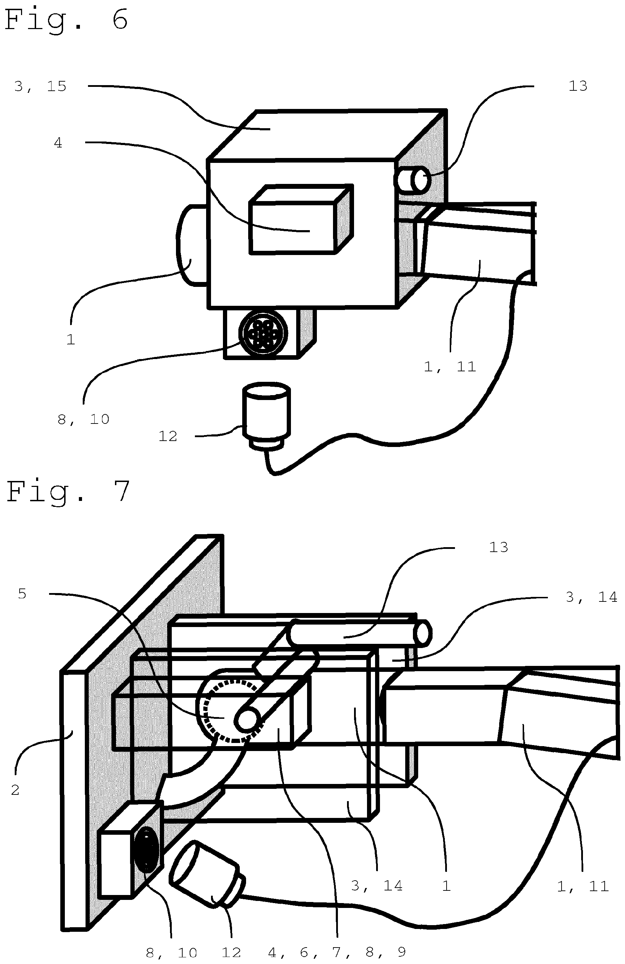

In Figur 6 ist abweichend zu den Figuren 1,2 und 4 der Kasten 15 der Schlossanordnung 3 auch oben geschlossen. Der Griff 13 des Zugmauls 1 wird vom Kasten 15 mit umschlossen. Der Kasten 15 ist dafür etwas höher als bei der oben bereichsweise geöffneten Variante ausgeführt. Das Zugmaul 1 liegt auf der unteren Wandung des Kasten 15 innen auf. Nach oben wird die Bewegung des Zugmauls 1 im gesicherten oder gesperrten Zustand durch den Bolzen 16 oder Riegel 16 des Schlosses 4 begrenzt, so das eine Entnahme verhindert wird. Der Vorteil diese Anordnung ist, dass der Bolzen 16 oder Riegel 16 ebenfalls vom Kasten 15 mit umschlossen ist und somit ein Durchtrennen des Bolzens 16 oder Riegels 16 für eine unberechtigte Entnahme oder einen Diebstahl verhindert oder zumindest erheblich erschwert.

Eine weitere Ausführung einer Schlossanordnung 3 an einem Bauwerk (nicht dargestellt) ist in Figur 5 dargestellt. Hierbei ist die Schlossanordnung 3 als nach oben offenes u-formiges Profil 17 ausgeführt. Der Bolzen 16 oder Riegel 16 ist bei eingelegtem Zugmaul 1 zwischen dem Zugmaul 1 und dem Griff 13 von einer der gegenüberliegenden Seitenwände des Profils 17 zur anderen Seitenwand geführt und begrenzt eine Bewegung durch den Boden des Profils 17 und den Bolzen 16 oder Riegel 16. Im Boden des Profils 17 ist zudem Kommunikationsschnittstelle 6, eine Datenerfassungs- und/oder Datenverarbeitungseinheit 7 sowie eine Energieversorgung 8 mit einem Energiespeicher 9 vorhanden. Zudem besteht eine Verbindung zum elektromagnetischen Schloss 4.

Eine zu einem Kasten 15 einer Schlossanordnung 3 alternative Ausführung ist in den Figuren 3 und 7 dargestellt. Hierbei sind als Schlossanordnung 3 an einem Bauwerk 2 zueinander beabstandete Platten 14 nebeneinander in gleicher Höhe, jeweils senkrecht und zueinander parallel angeordnet. In der Flucht zwischen den Platten 14 ist am Bauwerk 2 ein Kupplungskugelkopf 5 angeordnet. Das Zugmaul 1 des jeweiligen Fahrzeuganhängers 11 lässt sich somit vom Kupplungskugelkopf 5 abnehmen oder auf diesen aufsetzen. Der Kupplungskugelkopf 5 ist in einer entsprechende Höhe angeordnet, so dass bei dem auf den Kupplungskugelkopf 5 nur aufgesetzten oder an den Kupplungskugelkopf 5 eingeklingten Zugmaul 1 der Bolzen 16 oder Riegel 16 zwischen dem Zugmaul 1 und dem Griff 13 von einer der Platten 14 zur anderen Platte 14 geführt ist und somit eine Bewegung durch den Kupplungskugelkopf 5 und den Bolzen 16 oder Riegel 16 begrenzt wird. Der Bolzen 16 oder Riegel 16 ist jeweils durch die Platten 14 geführt und mündet auf einer Seite im Schloss 4. Am Bauwerk 2, was eine Wand eines Hauses oder eines Carport ist zudem der Steckanschluss 10 für den Fahrzeuganhängerstecker 12 des Fahrzeuganhängers 11 angeordnet.

Unabhängig von der Ausführung der Schlossanordnung 3 wird in Bezug auf das elektronische Schloss 4, Kommunikationsschnittstelle 6, Datenerfassungs- und/oder Datenverarbeitungseinheit 7, die Energieversorgung 8 und der Energiespeicher 9 auf das oben geschriebene Bezug genommen, da die Funktionsweisen unabhängig von der Ausführung der Schlossanordnung 3 übertragbar sind.

Unabhängig von einer der Ausführungen der Schlossanordnung 3 ist der Stab 16, Bolzen 16 oder Riegel 16 beispielsweise auf der des Schlosses 4 gegenüberliegenden Seite abgewinkelt oder hutförmig oder flanschartig geweitet, wie dies in den Figuren 2 bis 5 dargestellt ist.

### Zusammenstellung der Bezugszeichen

- 1 -: Zugmaul
- 2 -: Bauwerk
- 3 -: Schlossanordnung
- 4 -: Schloss
- 5 -: Kupplungskugelkopf
- 6 -: Kommunikationsschnittstelle
- 7 -: Datenerfassungs- und/oder Datenverarbeitungseinheit
- 8 -: Energieversorgung
- 9 -: Energiespeicher
- 10 -: Steckanschluss
- 11 -: Fahrzeuganhänger
- 12 -: Fahrzeuganhängerstecker
- 13 -: Griff
- 14 -: Platte
- 15 -: Kasten
- 16 -: Stab, Bolzen, Riegel
- 17 -: Profil

## Patentansprüche

1. Sicherungssystem für Fahrzeuganhänger (11),
wobei um das Zugmaul (1) und/oder die Deichsel (1) eine mit einem Bauwerk (2) verbundene Schlossanordnung (3) vorhanden ist, wobei die Schlossanordnung (3) mittels eines elektromechanischen Schlosses (4) für den Berechtigten entsperrbar und/oder sperrbar ist und wobei eine Anwesenheitskontrolle des Fahrzeuganhängers (11) vorgesehen ist **dadurch gekennzeichnet,**
**dass** die Anwesenheitskontrolle über die Bordelektronik und/oder die Verkabelung des Fahrzeuganhängers (11) vorgesehen ist.

2. Sicherungssystem nach Anspruch 1, **dadurch gekennzeichnet,**
**dass** das Bauwerk (2) ein Carport oder Gebäude oder eine Komponente eines Carports oder Gebäudes ist oder eine Säule, ein Zaun oder eine Mauer oder Wand ist.

3. Sicherungssystem nach Anspruch 1 und 2, **dadurch gekennzeichnet,**
**dass** die Schlossanordnung (3) oder das Bauwerk (2) einen Kupplungskugelkopf (5) aufweist.

4. Sicherungssystem nach einem der vorhergehenden Ansprüche, **dadurch gekennzeichnet,**
**dass** das Schloss (4) durch den Berechtigten und/oder remote entsperrbar und sperrbar ist.

5. Sicherungssystem nach einem der vorhergehenden Ansprüche, **dadurch gekennzeichnet,**
**dass** die Schlossanordnung (3) oder das Schloss (4) und/oder das Bauwerk (2) und/oder der Fahrzeuganhänger (11) zumindest eine drahtgebundene oder drahtlose Kommunikationsschnittstelle (6) umfasst und /oder einen Zugang zum Internet aufweist.

6. Sicherungssystem nach einem der vorhergehenden Ansprüche, **dadurch gekennzeichnet,**
**dass** die Schlossanordnung (3) oder das Schloss (4) und/oder das Bauwerk (2) und/oder der Fahrzeuganhänger (11) zumindest eine Datenerfassungs- und/oder Datenverarbeitungseinheit (7) oder eine Verbindung zu einer Datenerfassungs- und/oder Datenverarbeitungseinheit (7) aufweist.

7. Sicherungssystem nach einem der vorhergehenden Ansprüche, **dadurch gekennzeichnet,**
**dass** eine Energieversorgung (8) für die Schlossanordnung (2) und/oder für den Fahrzeuganhänger (11) mittels Energiespeicher (9) und/oder über das Bauwerk (2) vorhanden ist.

8. Sicherungssystem nach einem der vorhergehenden Ansprüche, **dadurch gekennzeichnet,**
**dass** die Anwesenheitskontrolle berührungslos und/oder mittels Sensoren vorgesehen ist.

9. Sicherungssystem nach einem der vorhergehenden Ansprüche, **dadurch gekennzeichnet,**
**dass** an der Schlossanordnung (3) oder am Bauwerk (2) ein Steckanschluss (10) für einen Fahrzeuganhängerstecker (12) vorhanden ist.

10. Sicherungssystem nach einem der vorhergehenden Ansprüche, **dadurch gekennzeichnet,**
**dass** ein Ortungssystem des Fahrzeuganhängers (1) auslesbar und/oder dass zumindest ein beleuchteter Werbeträger oder eine beleuchtete Werbefläche am Fahrzeuganhänger (11) betreibbar ist.

11. Verwendung des Sicherungssystem für Fahrzeuganhänger (11) nach Anspruch 1 bis 10, für eine unbeaufsichtigten Ausgabe und Rückgabe und eine Überwachung dessen von Fahrzeuganhänger (11), wobei sich die Fahrzeuganhänger an jeweils gleichen oder beliebigen Standorten entnehmen und/oder abgeben und die entsprechende Schlossanordnung entsperren oder sperren lässt.

## Claims

1. Securing system for vehicle trailers (11),
wherein a lock arrangement (3) connected to a structure (2) is present around the towing jaw (1) and/or the drawbar (1), wherein the lock arrangement (3) can be unlocked and/or locked for the authorised person by means of an electromechanical lock (4) and wherein a presence check of the vehicle trailer (11) is provided, **characterised in that** the lock arrangement (3) can be unlocked and/or locked by means of an electromechanical lock (4),
**in that** the presence check is provided via the on-board electronics and/or the wiring of the vehicle trailer (11).

2. Securing system according to claim 1.
**is characterised in that,**
the structure (2) is a carport or building or a component of a carport or building, or is a column, fence or wall.

3. Securing system according to claim 1 or 2,
**is characterised in that**,
the lock arrangement (3) or the structure (2) has a coupling ball head (5).

4. Securing system according to one of the above claims,
**is characterised in that**,
the lock (4) can be unlocked and locked by the authorised person and/or remotely.

5. Securing system according to one of the above claims,
**is characterised in that,**
the lock arrangement (3) or the lock (4) and/or the structure (2) and/or the vehicle trailer (11) comprises at least one wired or wireless communication interface (6) and/or has access to the Internet.

6. Securing system according to one of the above claims,
**is characterised in that,**
the lock arrangement (3) or the lock (4) and/or the structure (2) and/or the vehicle trailer (11) has at least one data acquisition and/or data processing unit (7) or a connection to a data acquisition and/or data processing unit (7).

7. Securing system according to one of the above claims,
**is characterised in that,**
an energy supply (8) is provided for the lock arrangement (2) and/or for the vehicle trailer (11) by means of energy storage (9) and/or via the structure (2).

8. Securing system according to one of the above claims,
**is characterised in that,**
the presence check is provided via the on-board electronics and/or the wiring of the vehicle trailer (11).

9. Securing system according to one of the above claims,
**is characterised in that,**
a plug connection (10) for a vehicle trailer plug (12) is provided on the lock arrangement (3) or on the structure (2).

10. Securing system according to one of the above claims,
**is characterised in that,**
a locating system of the vehicle trailer (1) can be read and/or in that at least one illuminated advertising medium or an illuminated advertising surface can be operated on the vehicle trailer (11).

11. Use of the securing system for vehicle trailers (11) according to claim 1 to 10, for unattended release and return and monitoring thereof of vehicle trailers (11), wherein the vehicle trailers can be removed and/or released at the same or any locations and the corresponding lock arrangement can be unlocked or locked.

## Revendications

1. Système de sécurité pour remorques de véhicules (11),
dans lequel un dispositif de verrouillage (3) relié à une structure (2) se trouve autour de la chape d'attelage (1) et/ou du timon (1), le dispositif de verrouillage (3) pouvant être déverrouillé et/ou verrouillé pour la personne autorisée au moyen d'une serrure électromagnétique (4) et dans lequel un contrôle de présence de la remorque de véhicule (11) est prévu, **caractérisé en ce**
**que** le contrôle de présence est prévu au moyen de l'électronique embarquée et/ou le câblage de la remorque de véhicule (11).

2. Système de sécurité selon la revendication 1, **caractérisé en ce**
**que** la structure (2) est un abri de voiture ou un composant d'un abri de voiture ou d'un bâtiment ou une colonne, une clôture ou un mur ou une paroi.

3. Système de sécurité selon les revendications 1 et 2, **caractérisé en ce**
**que** le dispositif de verrouillage (3) ou la structure (2) présente une boule d'attelage (5).

4. Système de sécurité selon l'une des revendications précédentes,
**caractérisé en ce**
**que** la serrure (4) peut être déverrouillée et verrouillée par la personne autorisée et/ou à distance.

5. Système de sécurité selon l'une des revendications précédentes,
**caractérisé en ce**
**que** le dispositif de verrouillage (3) ou la serrure (4) et/ou la structure (2) et /ou la remorque de véhicule (11) comprend au moins une interface de communication (6) filaire ou sans fil et/ou présente un accès à Internet.

6. Système de sécurité selon l'une des revendications précédentes,
**caractérisé en ce**
**que** le dispositif de verrouillage (3) ou la serrure (4) et/ou la structure (2) et /ou la remorque de véhicule (11) présente au moins une unité de traitement de données (7) ou une connexion à une unité de saisie de données et/ou de traitement de données (7).

7. Système de sécurité selon l'une des revendications précédentes,
**caractérisé en ce**
**qu'**une alimentation en énergie (8) est présente pour le dispositif de verrouillage (2) et/ou pour la remorque de véhicule (11) au moyen d'un accumulateur d'énergie (9) et/ou via la structure (2).

8. Système de sécurité selon l'une des revendications précédentes,
**caractérisé en ce**
**que** le contrôle de présence est prévu sans contact et/ou via l'électronique embarquée et/ou le câblage de la remorque de véhicule (11) et/ou au moyen de capteurs.

9. Système de sécurité selon l'une des revendications précédentes,
**caractérisé en ce**
**qu'**une prise (10) est présente sur le dispositif de verrouillage (3) ou sur la structure (2) pour un connecteur de remorque de véhicule (12).

10. Système de sécurité selon l'une des revendications précédentes,
**caractérisé en ce**
**qu'**un système de géolocalisation de la remorque de véhicule (1) est lisible et/ou qu'au moins un support publicitaire lumineux ou un panneau publicitaire lumineux est exploitable sur la remorque de véhicule (11).

11. Utilisation du système de sécurité pour remorques de véhicules (11) selon les revendications 1 à 10 pour une mise à disposition et une restitution sans assistance de remorques de véhicules (11) et leur surveillance, les remorques de véhicules pouvant être au choix respectivement prises et/ou restituées au même endroit ou à des endroits différents et le dispositif de verrouillage correspondant pouvant être déverrouillé ou verrouillé.
